(19)

**Europäisches Patentamt**
**European Patent Office**
**Office européen des brevets**

(11) **EP 4 589 917 A2**

(12) **EUROPEAN PATENT APPLICATION**

(43) Date of publication:
   **23.07.2025 Bulletin 2025/30**

(21) Application number: **25151432.9**

(22) Date of filing: **13.01.2025**

(51) International Patent Classification (IPC):
   **H04L 47/17** (2022.01)   **H04L 43/0852** (2022.01)
   **H04L 43/0864** (2022.01)   **H04L 47/283** (2022.01)
   **H04W 28/02** (2009.01)   **H04W 28/14** (2009.01)
   **H04W 84/18** (2009.01)   **H04W 84/22** (2009.01)
   **H04W 88/16** (2009.01)

(52) Cooperative Patent Classification (CPC):
   **H04L 47/283; H04L 43/0852; H04L 43/0864;**
   **H04L 47/17; H04W 28/0289; H04W 28/14;**
   **H04W 84/18; H04W 84/22; H04W 88/16**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(30) Priority: **16.01.2024 PCT/CN2024/072432**

(71) Applicant: Honeywell International Inc.
   **Charlotte, NC 28202 (US)**

(72) Inventors:
   • **ZHANG, Zhanpeng**
      **Charlotte, 28202 (US)**
   • **SHEN, Xueqin**
      **Charlotte, 28202 (US)**
   • **LIN, Di**
      **Charlotte, 28202 (US)**
   • **SUN, Wen Long**
      **Charlotte, 28202 (US)**

(74) Representative: **Haseltine Lake Kempner LLP**
   **Cheapside House**
   **138 Cheapside**
   **London EC2V 6BJ (GB)**

(54) **CONTROLLING COMMUNICATIONS IN MESH NETWORKS BASED ON INTER-MESSAGE DELAYS**

(57)   An illustrative method includes determining a network delay associated with each Internet of Things (IoT) device of a plurality of IoT devices. The illustrative method includes determining a minimum inter-message delay for each IoT device that is based at least in part on the network delay associated with the each IoT device. The illustrative method includes sending messages from a headend device to one or more of the IoT devices over the mesh network, where two or more messages sent to any corresponding individual IoT device are sent with an inter-message delay that is at least as great as the minimum inter-message delay of the corresponding individual IoT device.

FIG. 1

EP 4 589 917 A2

**Description**

TECHNICAL FIELD

The present disclosure relates generally to mesh networks including Internet of Things (IoT) devices such as smart sockets, and more particularly to controlling communications in mesh networks based on inter-message delays.

BACKGROUND

Internet of thing (IoT) devices are pieces of hardware, such as sensors, actuators, gadgets, appliances, or machines, that are programmed for certain applications and that can transmit data over the internet or other networks. For instance, smart sockets can provide power to a variety of different devices that are plugged into a receptacle of the smart sockets. Smart sockets may include a number of programmable parameters that need to be configured and/or may occasionally need to be updated (e.g., based on a change in a user preference, etc.). Smart sockets can include circuitry that allows a user to remotely control programmable parameters of the smart sockets. For instance, a user can remotely control whether the smart sockets provide power to devices that are plugged into a receptacle of the smart sockets.

SUMMARY

The present disclosure relates generally to mesh networks including Internet of Things (IoT) devices such as smart sockets, and more particularly relates to controlling communications in mesh networks based on inter-message delays.

An example may be found in a method for controlling communication between a headend device and each IoT device of a plurality of IoT devices over a mesh network (e.g., a wireless mesh network). The example method includes determining a network delay associated with each IoT device of the plurality of IoT devices, where the network delay is representative of a network latency between the headend device and each IoT device of the plurality of IoT devices. The example method includes determining a minimum inter-message delay for each IoT device of the plurality of IoT devices. The minimum inter-message delay is based at least in part on the network delay associated with communicating between the headend device and the corresponding IoT device of the plurality of IoT devices. The example method includes sending messages from the headend device to one or more of the plurality of IoT devices over the mesh network, where two or more messages sent to any corresponding individual IoT device of the plurality of IoT devices are sent with an inter-message delay that is at least as great as (e.g., is equal to or is greater than) the minimum inter-message delay of the corresponding individual IoT device.

Another example may be found in a gateway including a first port for communicating with an external controller, a second port for communicating with a plurality of IoT devices over a mesh network, and a controller operatively coupled to the first port and the second port. The controller can be configured to determine a network delay associated with communicating between the controller and each of the plurality of IoT devices on the mesh network. The network delay is representative of a network latency between the gateway and a corresponding individual IoT device. The controller can be configured to receive a plurality of commands via the first port, queue in a command queue at least some of the plurality of commands received via the first port, send an acknowledgement via the first port for each of the plurality of commands received via the first port, assemble commands for delivery to the plurality of IoT devices via the second port, the assembled commands based on the plurality of commands received via the first port, and automatically adjust a message delivery rate for delivering the assembled commands to each IoT device of the plurality of IoT devices based at least in part on the network delay determined for the corresponding IoT device (e.g., a corresponding individual IoT device).

Another example may be found in a method for controlling communication between a headend device and each IoT device of a plurality of IoT devices over a mesh network. The method can include receiving, by the headend device, a plurality of commands. The method can include assembling, in a command queue, commands for delivery to the plurality IoT devices via the mesh network, at least some of the assembled commands based on the plurality of commands received by the headend device, and wherein the assembled commands include configuration commands and status commands. The method can include determining when a number of configuration commands in the command queue is larger than a configuration command queue threshold, and when the number of configuration commands in the command queue is larger than the configuration command queue threshold, pausing the sending of the status commands in the command queue until the number of configuration commands in the command queue falls below the configuration command queue threshold.

The preceding summary is provided to facilitate an understanding of some of the innovative features unique to the present disclosure and is not intended to be a full description. A full appreciation of the disclosure can be gained by taking the entire specification, claims, figures, and abstract as a whole.

**EP 4 589 917 A2**

BRIEF DESCRIPTION OF THE FIGURES

The disclosure may be more completely understood in consideration of the following description of various examples in connection with the accompanying drawings, in which:

Figure 1 is a schematic block diagram of an illustrative mesh system;
Figure 2 is a diagram showing an illustrative incoming communications table;
Figure 3 is a diagram showing an illustrative mesh network performance parameter table;
Figure 4 is a flow diagram showing an illustrative method for controlling communications in mesh networks based on inter-message delays;
Figure 5 is a flow diagram showing an illustrative method for selectively throttling status polling with status commands associated with controlling communications in mesh networks based on inter-message delays;
Figure 6 is a flow diagram showing an illustrative method for transmitting a configuration command in accordance with controlling communications in mesh networks based on inter-message delays;
Figure 7 is a flow diagram showing an illustrative method for controlling communication between a headend device and each Internet of Things (IoT) device of a plurality of IoT devices over a mesh network;
Figure 8 is another flow diagram showing an illustrative method for controlling communication between a headend device and each IoT device of a plurality of IoT devices over a mesh network;
Figure 9 is a flow diagram showing an illustrative method for controlling communications in mesh networks based on inter-message delays;
Figure 10 is schematic block diagram of an illustrative method for determining a minimum inter-message delay.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.
All numbers are herein assumed to be modified by the term "about", unless the content clearly dictates otherwise. The recitation of numerical ranged by endpoints includes all numbers subsumed within that range (e.g., 1 to 5 includes, 1, 1.5, 2, 2.75, 3, 3.8, 4, and 5).
As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.
It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

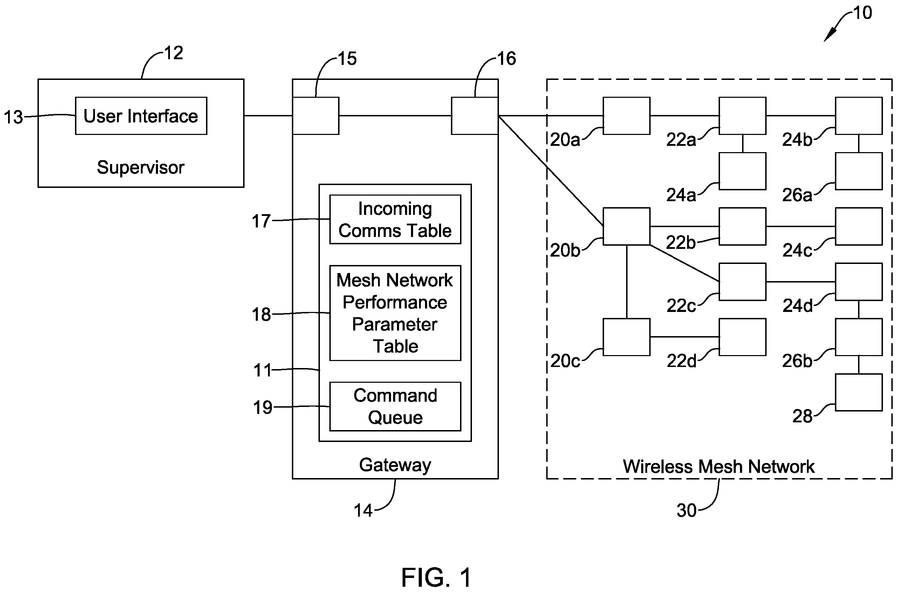

Figure 1 is a schematic block diagram showing an illustrative system 10. The system 10 may be deployed in the building control system context. For instance, the system 10 may include devices that represent components in a building control context. For instance, the devices may include various electrical appliances that can be coupled to and selectively receive power from smart sockets, among other possibilities.
The illustrative system 10 includes a supervisor 12, a headend device such as a gateway 14 (e.g., a gateway hub), and Internet of Things (IoT) devices 20, 22, 24, 26, 28. The supervisor 12 may be manifested as an application executing on a computer such as a computer server and/or a smartphone. The supervisor 12 includes a user interface 13. In some cases, the user interface 13 may be a display for displaying information. In some cases, the user interface 13 may include a data entry device such as a keyboard, mouse, trackball or electronic writing surface. In some cases, the user interface 13 may include a touch screen that functions as a display as well as providing data entry functionality.
The supervisor (e.g., a configuration update tool) 12 may be used for updating a configuration of at least some of the IoT devices 20, 22, 24, 26, 26, 28. In some instances, the supervisor may be configured for downloading a configuration command (e.g., a confirmation update message) to one or more of the IoT devices 20, 22, 24, 26, 26, 28 over the wireless mesh network 30. For instance, the supervisor 12 may be configured to cause the user interface 13 to display a device identifier for each of one or more of the IoT devices 20, 22, 24, 26, 26, 28, and may accept from a user a selection of which IoT device the user wishes to update a configuration. Once the user selects one or more IoT devices and a selects a desired configuration change of the one or more IoT devices, the supervisor 12 sends a command (e.g., a configuration command) to the gateway 14. Subsequently, the gateway assembles and sends a configuration command to the selected one or more IoT devices via the mesh network 30. The configuration command can include information that, when received by the one or more corresponding IoT devices, causes a configuration (e.g., a setting) of the one or more corresponding IoT devices to be changed (e.g., turns the respective one or more IoT devices on/off, etc.), as detailed herein. While an individual external controller in the form of individual supervisor 12, is shown, it will be appreciated that this is merely illustrative, as the system 10 may include any number of external controllers (e.g., supervisors).

The gateway 14 can be coupled via a first port 15 to an external controller such as the supervisor 12. The gateway 14 can communicate via the first port 15 with the external controller such as the supervisor 12. In some instances, the first port 15 can be a Building Automation and Control Network (BACNET) port and the gateway 14 can communicate with the supervisor 12 using the BACNET protocol.

The gateway 14 can be coupled via a second port 16 to the IoT devices 20, 22, 24, 26, 28 over a mesh network such as the wireless mesh network 30. For instance, the second port 16 can be a BLUETOOTH low-energy (BLE) port and the gateway 14 can be coupled via the BLE port to each of the IoT devices 20, 22, 24, 26, 28 in the wireless mesh network 30. While BLE is used as an example for the wireless mesh network 30, it is contemplated that any suitable wireless communication protocol may be used. In some embodiments, the wireless mesh network 30 is a BLE mesh network, the IoT devices 20, 22, 24, 26, 28 are each individual BLE controllable electrical sockets, the first port 15 is a BACnet port, and the second port 16 is a BLE port. While an individual gateway 14 is shown, it will be appreciated that this is merely illustrative, as the system 10 may include any number of gateways.

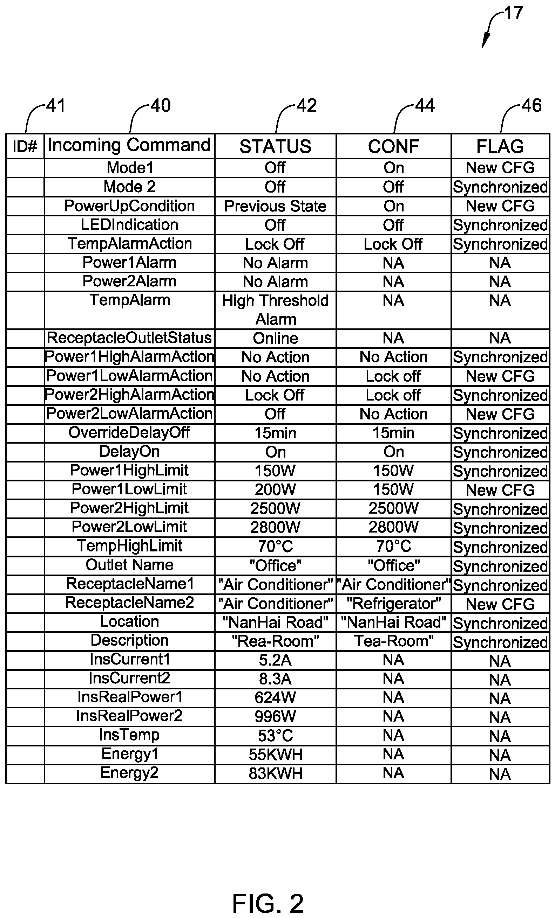

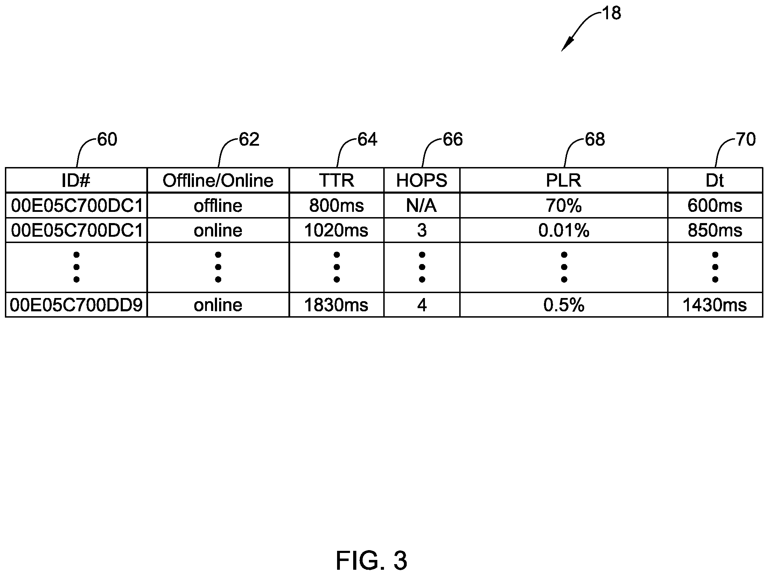

The gateway 14 can store status information associated with the IoT devices 20, 22, 24, 26, 28. For instance, the gateway 14 can include a memory 11 to store the status information associated with the IoT devices 20, 22, 24, 26, 28. The memory 11 in the gateway 14 can be a volatile memory, a non-volatile memory, or a combination thereof. The status information can include performance parameters and settings associated with the IoT devices 20, 22, 24, 26, 28. The status information can be stored in a table (e.g., a look-up table) or other data structure in the memory 11 of the gateway 14. For instance, the gateway 14 can store that status information in an incoming communications table ("Incoming Comms Table") 17 and a mesh network performance parameter table 18 in the memory 11 of the gateway 14, as described herein with respect to for example FIG. 2 and FIG. 3, respectively.

In some embodiments, at least a portion of the memory 11 in the gateway 14 can be configured as a shadow memory. For instance, the memory 11 in the gateway 14 can be a random-access memory (RAM) with at least a portion of the RAM configured a shadow RAM. In some embodiments, the shadow memory in the gateway 14 can be configured to store current (e.g., real-time or near real-time) status information such as performance parameters and setting associated with the IoT devices 20, 22, 24, 26, 28.

The current status information of the IoT devices 20, 22, 24, 26, 28 can be determined by polling (e.g., periodic status polling) the IoT devices 20, 22, 24, 26, 28. For instance, the gateway 14 can send status commands (e.g., status messages) periodically to the IoT devices to obtain current status information that is then stored in gateway 14 (e.g., stored in the shadow RAM in the gateway 14). Performing periodic status polling and storage of the current status information in the memory 11 of the gateway 14 can promote aspects herein, such as permitting the timely and effective transmission of configuration commands to the IoT devices based on respective current minimum inter-message delays associated with the IoT devices. Due to the relatively slower transmission speeds associated with the second port and/or the wireless mesh network, approaches herein can intentionally impart an inter-message delay that is sufficient (e.g., is at least as great as a minimum inter-message delay associated with a corresponding individual IoT device) to ensure that consecutive messages sent to a particular individual IoT device are afforded sufficient time to be transmitted and received by the corresponding individual IoT device. This may help to reduce network collisions on the mesh network and improve the overall communication efficiency and bandwidth of the mesh network 30.

In some embodiments, the gateway 14 is configured to store at least respective minimum inter-message delay times associated with each of the IoT devices 20, 22, 24, 26, 28. In some embodiments, the gateway 14 is configured to store at least the corresponding configuration commands that are to be transmitted to one or more of the IoT devices 20, 22, 24, 26, 28. In some embodiments, the gateway 14 is configured to store at least the corresponding configuration commands that are to be transmitted to one or more of the IoT devices 20, 22, 24, 26, 28 and the respective minimum inter-message delay times associated with the IoT devices.

A headend device such as the gateway 14 can be configured to assemble commands and send the assembled commands to one or more of the plurality of IoT devices 20, 22, 24, 26, 28. In some instances, the gateway 14 is configured to receive a plurality of commands from the external controller such as the supervisor 12 via the first port 15, assemble configuration commands, and send the assembled configuration commands to the appropriate ones of the plurality of IoT devices 20, 22, 24, 26, 28 via the second port 16. For instance, the headend device such as the gateway 14 can include a command queue 19 (e.g., a mesh network command queue) that is configured to queue (e.g., store) at least some of commands (e.g. configuration commands, status commands, etc.) before communicating the queued commands to corresponding IoT devices (e.g., each queued command includes a corresponding IoT device ID that identifies a corresponding target IoT device).

In some instances, the commands include configuration commands and status commands. Status commands refer to commands that are sent from the gateway 14 to an individual IoT device and that, when received by the individual IoT device, cause the individual IoT device to reply with a return message indicating a current status (e.g., current status information) of the individual IoT device. In some cases, the status commands may be automatically generated by the gateway 14 and injected into the command queue to periodically poll the status of each of the IoT devices and to store the updated status in the gateway 14. Configuration commands refer to commands that when received and executed by an individual IoT device cause a configuration (e.g., a performance parameter or a setting) of the individual IoT individual device to be changed. In some instances, the configuration commands can be sent from the supervisor 12 to the gateway 14. The gateway 14 can store the configuration commands in the command queue 19 and subsequently can transmit the stored configuration commands to the individual IoT of the plurality of IoT devices.

In some embodiments, the headend device such as the gateway 14 is configured to determine a number of configuration commands stored in the command queue 19. The gateway 14 can be further configured to determine when a number of configuration commands in the command queue 19 is larger than a configuration command queue threshold (e.g., three stored configuration commands, ten stored configuration commands, etc.). In some instances, when the number of configuration commands in the command queue 19 is larger than the configuration command queue threshold, the gateway 14 can throttle (e.g., reduce a rate or pause) sending the status commands in the command queue until the number of configuration commands in the command queue falls below the configuration command queue threshold. When the number of configuration commands in the command queue is equal to or less than the configuration command queue threshold, the gateway 14 can continue with sending status commands at a normal (non-throttled) rate.

In some embodiments, the gateway 14 is configured to assemble commands (e.g., configuration commands and/or status commands) for delivery to the plurality of IoT devices via the second port 16, where the assembled commands are based at least in part on the plurality of commands received via the first port 15. Assembly of the commands can include ordering and/or storage of a plurality of corresponding configuration commands (e.g., corresponding to commands such as configuration commands sent by the supervisor 12 to the gateway 14) that are to be sent via the second port 16 to the plurality of IoT device via the second port 16. Assembly of the commands can also include automatically injecting status commands generated by the gateway 14 into the command queue to periodically poll the status of each of the IoT devices and to store the updated status in the gateway 14. In some approaches, the gateway 14 is configured to acknowledge each of a plurality of commands received from an external controller such as the supervisor 12 via the first port 15 before the gateway 14 assembles and/or sends corresponding commands to the plurality of IoT devices 20, 22, 24, 26, 28, via the second port 16. For instance, the gateway 14 can be configured to acknowledge each of a plurality of commands received from an external controller such as the supervisor 12 via the first port 15 before the gateway 14 assembles and sends the corresponding commands to the corresponding IoT devices 20, 22, 24, 26, 28, via the second port 16. In some instances, the gateway is configured to send the acknowledgement via the first port 15 for each of the plurality of command received via the first port 15 without waiting for the transmission of the corresponding configuration commands to the IoT device via the second port 16.

The corresponding messages can be transmitted to the IoT devices 20, 22, 24, 26, 28 over the wireless mesh network 30. For instance, the corresponding commands can be transmitted (e.g., sequentially, simultaneously, etc.) over the wireless mesh network 30 to one or more of the IoT devices based on the respective minimum inter-message delay times corresponding to each of the one or more of the plurality of IoT devices.

In some embodiments, the gateway 14 is configured to queue at least some of the corresponding messages in a command queue of the gateway 14 such that two or more commands sent to a particular one of the individual IoT device of the plurality of IoT devices are spaced in time by at least an inter-message delay that is at least as great as the minimum inter-message delay of the corresponding individual IoT device. For instance, in some embodiments the gateway 14 is configured to send a first command to an individual IoT device at a first time and is configured to send a second s command to the individual IoT device at a second time. In such instances, the gateway is 14 is configured to assemble the commands to impart an inter-message delay between the first and second time that is equal to or greater than the minimum inter-message delay of the individual IoT device.

In some embodiments, the gateway 14, is configured to automatically adjust a message delivery rate for delivering the assembled (e.g., queued) commands to each IoT device of the plurality of IoT devices based at least in part on the network delay determined for each of the corresponding individual IoT devices. For example, the gateway 14 can be configured to periodically send status commands to the plurality of IoT devices and determine, based periodically sending the status commands, the current network delay associated with each of the IoT devices. The gateway 14 can be further configured to automatically adjust the message delivery rate for delivering the commands to each IoT device of the plurality of IoT device based at least in part on the current network delay determined for the corresponding individual IoT device. For instance, an increase in network delay associated with an individual IoT device can coincide with the subsequent determination of an increased minimum inter-message delay for the individual IoT device. Conversely, a decrease in network delay associated with an individual IoT device can coincide with the subsequent determination of a decreased minimum inter-message delay for the individual IoT device. The increased or decreased minimum inter-message delay can dynamically change and can be stored in the gateway 14 such that any subsequent messages sent to the individual IoT device are sent with an inter-message delay that is at least as great as the current minimum inter-message delay of the corresponding individual IoT device that is stored in the gateway 14. Accordingly, changes to a network topology and/or changes in network conditions (e.g., a change in packet loss rate, noise, network traffic, etc.) can be accounted for to improve the overall communication efficiency and bandwidth of the mesh network 30.

Additionally, the approaches herein can yield the timely return of an acknowledge message transmitted by the gateway 14 back to the supervisor 12, sometimes prior to the gateway 14 transmitting a corresponding configuration command to the corresponding IoT device across the mesh network 30. The acknowledge message may be transmitted by the gateway 14 back to the supervisor 12 within a time window dictated by the communication protocol of the communication between the supervisor 12 and the gateway 14 (e.g. BACNET). This can reduce network traffic by, for example, reducing the need for the supervisor 12 to send a retry message when an acknowledge message is not received within the time window dictated by the communication protocol of the communication between the supervisor 12 and the gateway 14 (e.g. BACNET).

Further, the approaches herein can selectively throttle status polling (e.g., pause status polling) of the IoT devices responsive to a threshold number of configuration commands being stored in a command queue. As such, the approaches herein can selectively reduce network traffic and/or computation overhead associated with polling the IoT devices to ensure that the any pending configuration commands (e.g., configuration update messages) are timely and efficiently transmitted to the one or more IoT devices with a reduced amount or absence of status commands.

As illustrated in FIG. 1, the IoT devices 20, 22, 24, 26, 28 are operatively coupled in a wireless mesh network 30 (e.g., a wireless BLE mesh network) and can be located a respective number of hops from the gateway 14. For instance, a first IoT device 20a can be located zero hops away from the gateway, while a second IoT device 22a can be located one hop away from the gateway 14. Stated differently, the first IoT device 20a may communicate directly with the gateway without an intervening node or IoT devices located between the first IoT devices, while the second IoT device 22a may communicate indirectly with the gateway via the first IoT device 20a. That is, the first IoT device 20a can facilitate wireless communication between the second IoT device 22a and the gateway 14, as detailed herein.

The IoT devices can be categorized into a first group of IoT devices 20, a second group of IoT devices 22, a third group of IoT devices 24, a fourth group of IoT devices 26, and a fifth group of IoT device 28. The IoT devices within the first group of IoT devices 20 are each located zero hops away from the gateway 14 and are individually labeled as 20a, 20b and 20c. The IoT devices within the second group of IoT devices 22 are each located one hop away from the gateway 14 and are individually labeled as 22a, 22b, 22c, 22d. The IoT devices within the third group of IoT devices 24 are each located two hops away from the gateway 14 and are individually labeled as 24a, 24b, 24c, and 24d. The IoT devices within the fourth group of IoT devices 26 are each located three hops away from the gateway 14 and are individually labeled as 26a and 26b. The IoT device within the fifth group of IoT devices 28 is located four hops away from the gateway 14 and is labeled as 28. This is merely illustrative, as the first group of IoT devices 20, the second group of IoT devices 22, the third group of IoT devices 24, the fourth group of IoT device 26, and/or the fifth group of IoT devices 28 may each include any number of IoT devices, and in some cases may include a substantially larger number of IoT devices. In some instances, each of the first group of IoT devices 20, the second group of IoT devices 22, the third group of IoT devices 24, the fourth group of IoT device 26, and/or the fifth group of IoT devices 28 and the gateway hub 14 may together be considered as forming a wireless mesh network 30. The devices within the wireless mesh network 30 wirelessly communicate with the other devices within the wireless mesh network 30 as shown. In some cases, the wireless mesh network 30 may be an adaptive wireless mesh network where the connections between the various IoT devices along the mesh network may adaptively change based on IoT device and/or environmental conditions, but this is not required. For example, if IoT device 22b were to fail, IoT device 24c may automatically seek and discover IoT device 26a, IoT device 22c and/or IoT device 24d, and may automatically link to one of these IoT devices to maintain communication with the gateway 14. This is just one example. In some cases, the configuration of the mesh network 30 may be static and remain the same until changed manually by an installer or the like.

Each of the IoT devices 20, the IoT devices 22, the IoT devices 24, the IoT devices 26 and the IoT devices 28 may independently be any of a variety of different IoT devices. In general, IoT devices are physical objects having sensors, processing ability, software and/or other technologies that allow the devices to connect with and exchange data with other devices and systems over the Internet and/or other communication networks. IoT devices can include home automation devices, elder care devices, medical devices, transportation devices, vehicle to vehicle communication devices, building automation devices, appliances, industrial devices, maritime devices, infrastructure devices, energy management devices, environmental monitoring devices, and others.

In some cases, a smart socket may be considered as being an example of an IoT device. A smart socket is an electrical receptacle that provides power to a device that is plugged into the electrical receptacle. In some cases, a smart socket includes circuitry that is able to monitor various aspects of the power being provided to the device, as well as communications circuitry that allows the smart socket to report those power aspects to another device such as the gateway 14. In some cases, a smart socket can include circuitry that allows a user to remotely control the smart socket to control whether the smart socket provides power to a device that is connected to a receptacle of the smart socket. In some instances, the IoT devices can include a plurality of smart sockets. For instance, each of IoT devices 20, the IoT devices 22, the IoT devices 24, the IoT devices 26 and the IoT devices 28 may be smart sockets.

Figure 2 is a diagram showing an illustrative incoming communications table 17. Each IoT device (e.g., each of the IoT devices 22, 24, 26, 28, as described in FIG. 1) can have a corresponding identifier ("ID#") 41, as described herein. Each command ("Incoming command") 40 can be associated with an identifier of an IoT device to which the command is addressed. Examples commands with corresponding configuration values include: Mode1 (e.g. ON), Mode2 (e.g. OFF), PowerUpCondition (e.g. Previous State, ON, OFF), LEDIndication (e.g. ON, OFF), TempAlarmAction (e.g. ON, OFF, LOCK OFF), Power1Alarm (e.g. Alarm, No Alarm), Power2Alarm (e.g. Alarm, No Alarm), TempAlarm (e.g. Alarm, No Alarm, Low Threshold Alarm, High Threshold Alarm), ReceptacleOutletStatus (e.g. Online, Offline), Power1HighAlarmAction (e.g. No Action, Lock Off), Power1LowAlarmAction (e.g. No Action, Lock Off), Power2HighAlarmAction (e.g. No Action, Lock Off), Power2LowAlarmAction (e.g. No Action, Lock Off), OverrideDelayOff (e.g. OFF, 10min, 15min, 30min), DelayOn (e.g. OFF, 10min, 15min, 30min), Power1HighLimit (e.g. 60W, 100W, 150W, 200W, 2500W, 2800W), Power1LowLimit (e.g. 60W, 100W, 150W, 200W, 2500W, 2800W), Power2HighLimit (e.g. 60W, 100W, 150W, 200W, 2500W, 2800W), Power2LowLimit (e.g. 60W, 100W, 150W, 200W, 2500W, 2800W), TempHighLimit (e.g. 50C, 70C, 125C), Outlet Name (e.g. user specified variable name), ReceptacleName1 (e.g. user specified variable name), ReceptacleName2 (e.g. user specified variable name), Location (e.g. user specified variable name), Description (e.g. user specified variable name), InsCurrent1 (e.g. returns value measure and reported for ReceptacleName 1), InsCurrent2 (e.g. returns value measure and reported for ReceptacleName 2), InsRealPower1 (e.g. returns value measure and reported for ReceptacleName 1), InsRealPower2 (e.g. returns value measure and reported for ReceptacleName 2), InsTemp (e.g. returns value measure and reported for socket), Energy1 (e.g. returns value measure and reported for ReceptacleName 1), and Energy2 (e.g. returns value measure and reported for ReceptacleName 1), as shown in FIG. 2. Thus, each of the commands 40 can relate to a particular aspect of operation of an individual IoT device (e.g. smart socket) identified by the identifier 41. While these commands are illustrative commands for a smart socket, other commands and IoT devices are possible.

Each IoT device can have a current status ("Status") 42 associated with the corresponding command 40. The current status of each of the IoT devices can be obtained by the status commands that are periodically generated and sent by the gateway 14 to each IoT device. The current status of each of the IoT devices is stored in the communications table 17.

The current configuration ("CONF") column 44 identifies the current status to be set by the corresponding command. For example, the first command in the illustrative communications table 17 is "Mode1", which when sent to the corresponding IoT device via the mesh network sets the corresponding IoT device to "ON", as shown in the CONF column 44. The current status ("Status") of the corresponding IoT device is currently set to "Off'. The current status of the corresponding IoT device (e.g. "off') is compared to the status to be set by the corresponding incoming command (e.g. "On"), and if they are different, a "New CFG" flag is set for the corresponding incoming command, which indicates that the corresponding incoming command needs to be transmitted to the corresponding IoT device over the mesh network to updated the corresponding IoT device with the new configuration ("New CFG") sent by the supervisor 12. In some cases, the corresponding incoming command can be queued in a command queue and can be subsequently sent to the corresponding IoT device. If the current status of the corresponding IoT device is the same as the status to be set by the corresponding incoming command (e.g. "On"), a "Synchronized" flag is set for the corresponding incoming command, which indicates that the corresponding incoming command need not be transmitted to the corresponding IoT device over the mesh network. By not sending these commands across the mesh network may reduce the traffic on the mesh network.

Accordingly, the approaches herein can reduce network traffic, reduce a number of messages (e.g., command messages) stored in a command queue, reduce computational overhead associated with updating configurations of IoT devices, and/or ensure the timely communication of configuration commands to IoT devices which have a configuration change pending, as compared to other approaches such as those that store and/or transmit each configuration command sent by a supervisor to an intended recipient IoT device regardless of whether the configuration command will result in an actual change in a configuration of the recipient IoT device.

Figure 3 is a diagram showing an illustrative mesh network performance parameter table 18. The mesh network performance parameter table 18 can include an IoT device ID. For instance, each IoT device (e.g., each of the IoT devices 22, 24, 26, 28, described in FIG. 1) can have a corresponding IoT device ("ID#") 60. The mesh network performance parameter table 18 can include a corresponding IoT device ID that is specific to a corresponding individual IoT device of a plurality of IoT devices in a mesh network such as a BLE mesh network. Each IoT device ID can have corresponding information such as an offline/online status ("Offline/Online") 62, an amount of network delay ("TTR") 64, a number of hops ("HOPS") 66 that the each IoT device is from a headend device (e.g. gateway 14), a packet loss rate (PLR) 68, and a minimum inter-message delay (Dt) 70 for each IoT device, as shown in FIG. 3.

The offline/online status 62, the amount of network delay 64, the number of hops 66, and the PLR 68 associated with the each IoT device can be determined by the periodic status polling of each of the IoT devices, as described herein. For instance, the amount of network delay 64 to each IoT device can be determined based on a difference between two or more timestamps. For example, the gateway 14 can determine a difference between a first timestamp associated with transmission of a command from the gateway to an individual IoT device and a second timestamp associated with receipt of a corresponding acknowledge message at the gateway. In some embodiments, the amount of network delay 64 can be equal to a difference (e.g., an elapsed amount of time) between two or more timestamps such as the first timestamp and the second timestamp.

In some embodiments, the PLR 68 can be determined by sending a given number of messages (e.g., 1000 messages) to an individual IoT device and determining a number of messages (e.g., 2 messages) for which a corresponding acknowledge message is not received to determine a PLR (e.g., 0.2 percent) for the individual IoT device.

In some embodiments, the amount of network delay 64 for each IoT device of the plurality of IoT devices is based at least in part on a Time-To-Return (TTR) value that is representative of a sum of the network latency from the headend device to a corresponding individual IoT device and the network latency from a corresponding individual IoT device back to the headend device. That is, a headend device such as a gateway 14 can be configured to determine respective TTR values for data transmitted between a gateway and each of the plurality of IoT device. The TTR values can refer to an outbound transmission time from the gateway to an individual IoT device, a return transmission time from the individual IoT device to the gateway, or can be the sum of the outbound transmission time and the return transmission time. For instance, the network delay 64 can be sum of the outbound transmission time and the return transmission time as illustrated in FIG. 3.

In some cases, the minimum inter-message delay 70 for an individual IoT device is based at least in part on the amount of network delay 64 (e.g., a network latency) associated with the individual IoT device, the number of hops 66 that the individual IoT device is from a headend device, and/or the PLR 68 associated with the individual IoT device. For instance, in some embodiments, the minimum inter-message delay 70 for a corresponding individual IoT device (e.g., corresponding to a command sent by the supervisor) is based at least in part on a number of hops between the headend device and a corresponding individual IoT device across the mesh network (e.g., wireless mesh network). In some embodiments, the minimum inter-message delay 70 for a corresponding individual IoT device is based at least in part on a number of hops between the headend device and the corresponding individual IoT device across the mesh network. In some embodiments, the minimum inter-message delay 70 for a corresponding individual IoT device is based at least in part on a network latency between the headend device and the individual corresponding IoT device.

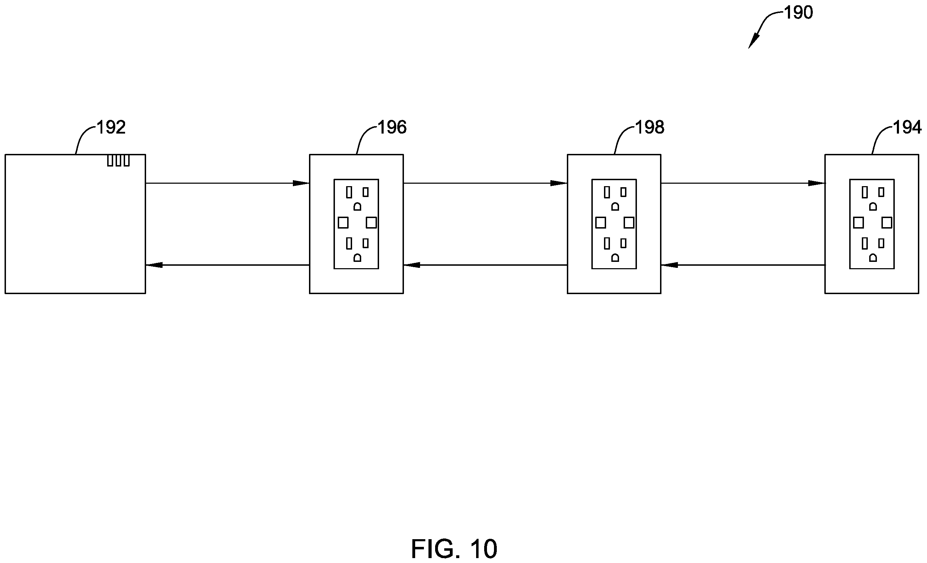

In some embodiments, the minimum inter-message delay 70 for an individual IoT device is based at least in part on the amount of network delay 64 (e.g., a network latency) associated with the individual IoT device, the number of hops 66 that the individual IoT device is from a headend device, and the PLR 68 associated with the individual IoT device. An example calculation of a minimum inter-message delay is detailed herein with respect to FIG. 10.

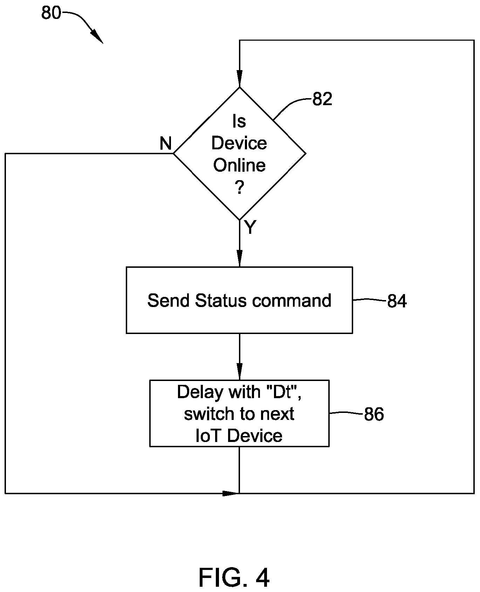

Figure 4 is a flow diagram showing an illustrative method 80 for controlling communications in mesh networks based on inter-message delays. In some instances, the method 80 is performed by a headend device such as a gateway.

A determination of an online status of an individual IoT device is made, as indicated at block 82. For instance, an online status of the individual IoT device that is stored in a memory (e.g., in a mesh network performance parameter table) indicate whether the individual IoT device is online (e.g., is powered on and is coupled to a mesh network such as a wireless mesh network) or is offline (e.g., is not coupled to the mesh network).

If the individual IoT device is determined to be online (e.g., has an online status as determined at block 82), control passes to block 84 and a status command is sent from a headend device (e.g. gateway 14) to the individual IoT device to poll status information (e.g., current performance parameters and/or current statuses) of the individual IoT devices. For instance, a current network delay associated with an individual IoT device can be determined based on the status commands sent to the individual IoT device. In some instances, the method 80 can include storage of the status information determined by the status polling. For instance, the status information determined by status polling can be stored in a memory in the headend device, among other possibilities.

Subsequent to polling of the status information, control passes to block 86 and a minimum inter-message delay (e.g., a current minimum inter-message delay) for the individual IoT device is determined, as described herein. In some instances, the method 80 can further include storage of the determined minimum inter-message delay in a memory of the headend device.

If the individual IoT device is determined to be offline at block 82 or subsequent to determination of the minimum inter-message delay at block 86, control returns to block 82 and the method 80 can be performed for a next (different) individual IoT device on the mesh network.

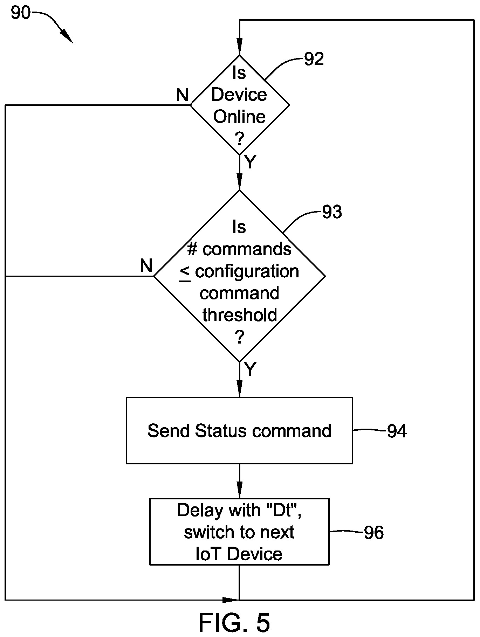

Figure 5 is a flow diagram showing an illustrative method 90 for selectively throttling status polling with status commands associated with controlling communications in mesh networks based on inter-message delays. The method 90 is performed by a headend device such as a gateway.

The elements in FIG. 5 are analogous to corresponding elements in FIG. 4, with the difference that the method 90 can selectively throttle status polling (e.g., throttle sending status commands). For instance, a determination of an online status of an individual IoT device is made, as indicated at block 92. The determination is made as detailed with respect to block 82 in FIG. 4.

If the individual IoT device is determined to be online, control passes to block 93 and a number of the configuration commands currently stored in a command queue in a headend device is compared to a configuration command queue threshold. The number of configuration commands currently stored in a command queue is equal to a number of configuration commands that are store in the command queue but that have not yet been sent to a corresponding individual IoT device via the mesh network.

If the number of configuration commands in the command queue is determined to be less than or equal to the configuration command queue threshold, control passes to block 94 and a status command is sent from the headend device to the individual IoT device to poll status information of the individual IoT device, as detailed at block 84 in FIG. 4.

Subsequent to polling of the status information at block 94, control passes to block 96 and a minimum inter-message delay (e.g., a current minimum inter-message delay) for the individual IoT device is determined, as described herein and as detailed at block 86 in FIG. 4.

If the number of configuration commands is greater than the configuration command queue threshold, as determined at block 93, the status command is not sent as in block 94, and control returns to block 92 and the method 90 can be performed for a next (different) individual IoT device. That us, the status commands set across the mesh network are throttled when the number of configuration commands in the configuration command queue that are needed to set one or more configurations updates to one or more of the IoT device gets too large.

The methods herein (e.g., method 80 and method 90) continue until status information (e.g., current status information) and a minimum inter-message delay for each individual IoT device that is online in a wireless mesh network is determined. The methods can be performed continuously, periodically, and/or responsive to an input or change in system condition (e.g., responsive to the addition or removal of an individual IoT device to the wireless mesh network). For instance, the methods can be performed periodically (e.g., to determine a current minimum inter-message delay for each of the individual IoT device at a fixed interval, etc.).

In some cases, the gateway can perform periodic status polling of the IoT devices in the background. Performing the status polling and other aspects in background can help ensure that current status information is stored in the gateway, and thereby help ensure that any subsequent commands (e.g., configuration commands) are timely sent to the corresponding IoT device with an inter-message delay that is aligned with a current minimum inter-message delay.

In some instances, a frequency of the periodic status polling of the IoT devices can be modified by the headend device. For instance, the frequency can be varied based on a number of IoT devices in a mesh network, a number of configuration commands received by the headend device over a period of time, and/or a number of configuration commands stored in a command queue of the headend device, among other possibilities.

The method 90 can continue until status polling of each individual IoT device is performed or until that status polling is paused, as described herein. When paused, the method 80 can resume when a quantity of configuration commands falls below a threshold, as described herein. Once resumed, the method 90 can continue until status polling of any remaining individual IoT devices is performed. The status polling can then be repeated and may remain on going to help ensure the current status of each IoT device is known by the gateway and reflected in, for example, the communications table of Figure 2.

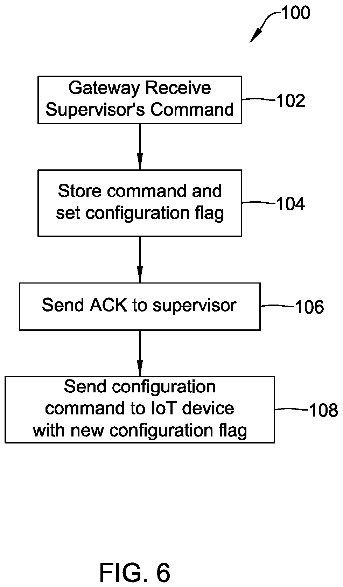

Figure 6 is a flow diagram showing an illustrative method 100 for transmitting a configuration command in accordance with controlling communications in mesh networks based on inter-message delays. The method 100 is performed by a headend device such as a gateway.

A headend device such as a gateway receives a command from a supervisor (e.g., supervisor 12 as illustrated in FIG. 1), as indicated at block 102. The command (e.g., a configuration command) can include information indicative of a desired change of a configuration of an individual IoT device or a desired change of a configuration of a group of IoT devices.

A headend device such as a gateway can store a command (e.g., a command sent to the gateway and/or a corresponding configuration command) in a memory of the headend device, as indicated at block 104. For instance, a gateway can store at least a configuration command in a memory (e.g., memory 11 as illustrated in FIG. 1) of the gateway, responsive to receipt of the command from the supervisor. In some instances, the gateway can store the configuration command in a communications table and/or a command queue. In such instances, the gateway can arrange (e.g., order, prioritize, etc.) one or more configuration commands in the command queue prior to sending the one or more configuration commands to one or more corresponding individual IoT devices. In some instances, a headend device such as a gateway can be configured to set a corresponding flag (e.g., a new configuration flag) responsive to storage of the command and/or the corresponding configuration command in the memory of the gateway, such as discussed with respect to Figure 2.

A headend device such as a gateway can send an acknowledgment message (ACK) to the supervisor, as indicated at 106. The gateway can send an acknowledge message to the supervisor responsive to receipt of the command from the supervisor, at block 102. As mentioned, the gateway can send an acknowledge message to the supervisor responsive to receipt of the command from the supervisor and prior to sending at least some of the corresponding configuration commands to the corresponding IoT devices. For instance, the gateway can send an acknowledge message to the supervisor responsive to receipt of the command from the supervisor and prior to sending at least some of the corresponding configuration commands to the corresponding IoT devices to ensure that the acknowledge message is timely sent back to the supervisor to adhere to the particular communication protocol that is used between the supervisor and the gateway.

A headend device such as a gateway can send the one or more configuration commands stored in the memory of the gateway to one or more corresponding individual IoT devices. For instance, each of the one or more configuration commands can be sent to one or more corresponding individual IoT devices that have a "New Configuration" flag or other indicator that is indicative of a pending configuration command stored in the configuration command queue, as described herein.

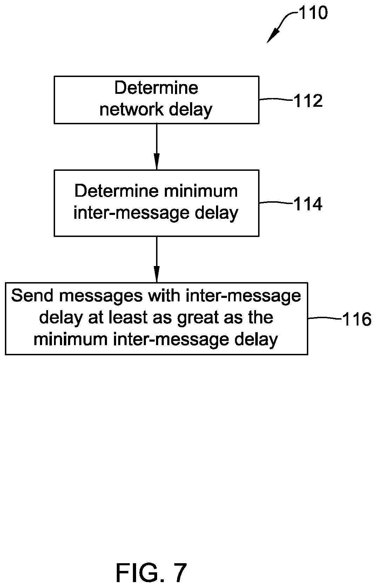

Figure 7 is a flow diagram showing an illustrative method 110 for controlling communication between a headend device and each IoT device of a plurality of IoT devices over a mesh network. The method 110 is performed by a headend device such as a gateway.

A headend device such as a gateway determines a network delay associated with one or more individual IoT devices of a plurality of IoT devices, as indicated at block 112. As mentioned, the network delay is representative of a network latency between the headend device and each individual IoT device of the plurality of IoT devices. For instance, the network delay can be equal to an amount of network latency between the headend device and each individual IoT device. Stated differently, the network delay can equal an amount of network latency between an individual headend device and an individual IoT device.

The headend device determines a minimum inter-message delay, as indicated at block 114. The headend device can determine a minimum inter-message delay for each IoT device of the plurality of IoT devices. As mentioned, the minimum inter-message delay is based at least in part on the network delay associated with the each IoT device of the plurality of IoT devices. In some embodiments, a minimum inter-message delay (e.g., a current minimum inter-message delay) can be determined responsive to receipt of current status information from status polling of the IoT devices by the gateway.

The headend device sends messages with an inter-message delay that is at least as great as the minimum inter-message delay, as indicated at block 116. For instance, the headend device sends messages to one or more of the plurality of IoT devices over the mesh network, where two or more messages sent to any corresponding individual IoT device of the plurality of IoT devices are sent with an inter-message delay that is at least as great as the minimum inter-message delay of the corresponding individual IoT device. As mentioned, sending the two or more messages to any corresponding individual IoT device with the inter-message delay that is at least as great as the minimum inter-message delay of the corresponding individual IoT device can help ensure that status commands (e.g., polling messages) and any subsequent configuration commands are transmitted at suitable respective intervals (e.g., with sufficient respective delay times) to the individual IoT devices, thereby mitigating network collisions and/or packet loss at the individual IoT devices.

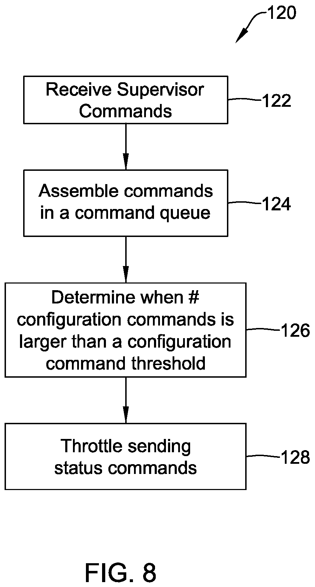

Figure 8 is another flow diagram showing an illustrative method 120 for controlling communication between a headend device and each IoT device of a plurality of IoT devices over a mesh network. The method 120 is performed by a headend device such as a gateway.

The headend device receives a supervisor command, as indicated at block 122. For instance, the headend device can receive a plurality of commands. The supervisor commands can be configuration commands sent from a supervisor to the headend device.

The headend device assembles, in a command queue, commands, as indicated at block 124. For instance, the headend device assembles, in a command queue, commands for delivery to one or more of the plurality IoT devices via the mesh network. The assembled commands are based on the supervisor command received by the headend device at block 122. In some instances, the assembled commands can include a number of configuration commands, along with a number of status commands that are automatically inserted by the headend device.

The headend device compares a number of configuration commands assembled in the command queue of the headend device to a configuration command queue threshold. Additionally, the headend device determines when a number of configuration commands assembled in the command queue is larger than a configuration command queue threshold, as indicated at block 126. When the number of configuration commands in the command queue is determined to be larger than the configuration command queue threshold, the headend devices throttles the sending of the status commands in the command queue, as indicated at block 128. For instance, the status polling or sending of the status command can remain throttled, be further throttled, or be paused (e.g., entirely ceased) until the number of configuration commands in the command queue falls below the configuration command queue threshold. As mentioned, the selective throttling of sending the status commands can help ensure that the configuration commands are timely sent (e.g., with a reduction in a quantity and/or frequency of sending of status commands) to the one or more corresponding IoT individual devices. In this way, the configurations of the one or more corresponding individual IoT devices can be timely updated in accordance with the timely sending of one or more configuration commands.

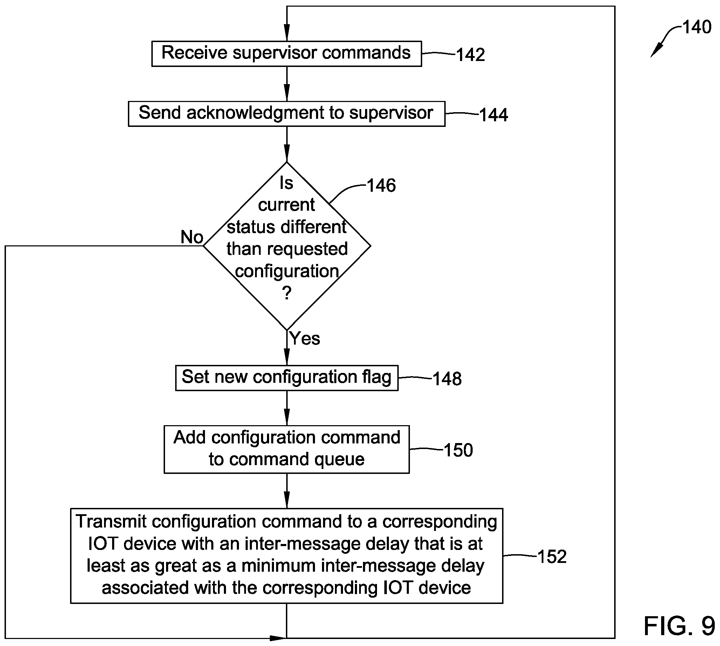

Figure 9 is a flow diagram showing an illustrative method 140 for controlling communications in mesh networks based on inter-message delays. The method 140 is performed by a headend device such as a gateway.

The headend device can receive a command (e.g., a supervisor command) from a supervisor, as indicated at block 142. As mentioned, the command can be received via a port included in the headend device. For instance, the command can be received via an ethernet Bacnet port in the headend device.

Responsive to receipt of the command, control can pass to block 144 and the headend device can send an acknowledge message to the supervisor. Thus, unlike other approaches that send an acknowledge message to a supervisor upon transmission of a configuration command to a corresponding IoT device, the approaches herein can send the acknowledge message sooner and thereby help ensure that the supervisor 12 does not send a retry message and/or that the configuration update of the one or more IoT devices occurs.

In some instances, the headend device can send additional acknowledgement messages to the supervisor. For instance, the headend device can send a first acknowledgement message to the supervisor responsive to receipt of the command from the supervisor and can subsequently send a second acknowledgement message responsive to the transmission of the configuration command to the corresponding IoT device, responsive to the corresponding IoT device downloading the configuration command, and/or responsive to a successful configuration update of the corresponding IoT device that is based on the configuration command.

Responsive to sending the acknowledgment message to the supervisor, a determination can be made whether a status (e.g., a current status) of an individual IoT device is different than a requested configuration status sent by the supervisor. As mentioned, the current status of the individual IoT device can be determined by periodic status polling of the IoT devices and the current status (e.g., corresponding to a most recent status as determined by status polling of the IoT devices) can be stored in a memory of the gateway. The status of an individual IoT device and the requested configuration status can each be stored in a memory of the gateway. The gateway can readily compare a current status to the requested configuration status to determine whether they are different. For instance, for an individual IoT device identifier associated with an individual IoT device the gateway can determine whether a current status of the individual IoT device stored in a table in a memory of the gateway matches (e.g., is exactly the same as) the requested configuration status stored in the table. The table can be an incoming communications table, as described herein.

If a determination is made that the status of the individual IoT device is different than a requested configuration status, control can pass to block 148 and a new configuration flag ("config flag") or other indicator can be set to indicate that the status is different than the requested configuration status. Responsive to setting the new configuration flag or other indicator, control can pass to block 150 and a configuration command can be added to the command queue in the gateway. Responsive to adding the command queue, control can pass to block 152 and a command such as a configuration command can be sent to a corresponding individual IoT device. For instance, the command can be sent with an inter-message delay that is at least as great as a minimum inter-message delay associated with the corresponding individual IoT device.

In some cases, the method 140 may include wirelessly transmitting one or more commands (e.g., configuration commands or status commands) to a corresponding individual smart socket of a plurality of smart sockets via the wireless mesh network with an inter-message delay from the immediate prior command sent to the corresponding individual smart socket that is at least as great as the minimum inter-message delay of the corresponding individual smart socket. In some instances, the smart sockets can be included in a building and can be connected to a power line network. Each smart socket is configured to receive an electrical plug from a corresponding electrical appliance and each smart socket is configured to wirelessly report one or more power parameters of power delivered by the smart socket from the power line network to the corresponding electrical appliance.

If the status (e.g., the current status) is determined to be the same as the requested configuration status at block 146, or subsequent to sending the configuration command to the corresponding IoT device at block 152, control returns to block 142 and another (different) supervisor command can be received by the headend device.

In some instances, the method 140 includes backing up the IoT device identifiers and corresponding status information (e.g., current performance parameters and/or current statuses) of the IoT devices stored in the memory of the gateway. For instance, the information such as status information stored in the memory of the gateway can be backed up a memory of a supervisor and/or otherwise backed up (e.g., storing the corresponding status information in a cloud server, etc.). In some cases, a backup of the status information can occur periodically, such as once per hour, once per day, once per week, etc. In some cases, a backup of the status information can occur responsive to a change in the configuration settings and/or responsive to the addition or removal of an individual IoT device to the wireless mesh network. These are just examples.

Figure 10 is schematic block diagram of an illustrative system 190 for determining a minimum inter-message delay.

As mentioned, a minimum inter-message delay for an individual IoT device may be based at least in part on the amount of network delay (e.g., a network latency) associated with the individual IoT device, the number of hops that the individual IoT device is from a headend device, and the PLR associated with the individual IoT device. For instance, the minimum inter-message delay for an individual IoT device (e.g., an individual IoT device 194, as illustrated in FIG. 10) in an accordance with Equation 1, below.

$$Dt = MIN \{T, K*L*N*t)\qquad\qquad (Equation\ 1)$$

where:

Dt: is a minimum inter-message delay associated with a first individual IoT device that is one or more hops from the gateway;

T: is a respective TTR associated with the first individual IoT device;

K: is a packet loss rate coefficient associated with the first individual IoT device;

L: is a respective packet loss rate associated with the first individual IoT device;

N: is the respective number of hops between the gateway and the first individual IoT device; and

t: is a respective TTR associated with a second individual IoT device that is one hop away from the gateway along a transmission path between the gateway and the first individual IoT device.

When a configuration command is sent from a gateway 192 to the individual IoT device 194 that is a number of hops away (e.g., 3 hops) away from the gateway 192, an illustrative calculation of a minimum inter-message delay for the individual IoT device 194 may be performed as follows.

$$500*0.002*3*800 = 2400\ milliseconds\ (ms)\qquad (Equation\ 2)$$

where:

K = 500;

L=0. 002;

N= 3 hops;

t = 800 ms;

T= 4300 ms;

Dt = MIN {4030 ms, 2400 ms}

One or more of the above values (K, L, N, t, T, and/or Dt) are determined by a headend device such as a gateway. For instance, in some embodiments, the headend device determines at least a value of Dt. In some embodiments, the headend device determines the values of at least Dt, T, and t.

Continuing with the above example, the value of t (e.g., 800 ms) is equal to a difference between a first timestamp associated with a time of transmission of an outbound command sent from the gateway 192 to a second individual IoT device 196 and a second timestamp associated with a time of receipt of a corresponding acknowledge transmission (e.g., an acknowledge message) received by the gateway 192.

Continuing with the above example, the value of T (e.g., 4300 ms) is equal to a difference between a first timestamp associated with a time of transmission of an outbound command sent from the gateway 192 to a first individual IoT device 194 and a second timestamp associated with a time of receipt of a corresponding acknowledge transmission (e.g., an acknowledge message) received by the gateway 192.

Continuing with the above example, the gateway will impart a delay that is at least as great as 2400 ms (minimum inter-message delay (Dt)) prior to transmitting a next subsequent command (e.g., to the same individual IoT and/or to a different individual IoT device). For instance, the gateway may impart a delay that is equal to 2400 ms prior to transmitting a subsequent command (e.g., a status command or a configuration command) to the same individual IoT device. While an individual gateway is shown, one more gateways can be employed. While three individual IoT devices are shown, the number of individual IoT devices can be altered (e.g., increased or decreased).

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

1. A method for controlling communication between a headend device and each Internet of Things (IoT) device of a plurality of IoT devices over a mesh network, the method comprising:

   determining a network delay associated with each IoT device of the plurality of IoT devices, wherein the network delay is representative of a network latency between the headend device and each IoT device of the plurality of IoT devices;

   determining a minimum inter-message delay for each IoT device of the plurality of IoT devices that is based at least in part on the network delay associated with communicating between the headend device and the corresponding IoT device of the plurality of IoT devices; and

   sending messages from the headend device to one or more of the plurality of IoT devices over the mesh network, wherein two or more messages sent to any corresponding individual IoT device of the plurality of IoT devices are sent with an inter-message delay that is at least as great as the minimum inter-message delay of the corresponding individual IoT device.

2. The method of claim 1, wherein the network delay for each IoT device of the plurality of IoT devices is based at least in part on a Time-To-Return (TTR) value that is representative of a sum of the network latency from the headend device to a corresponding individual IoT device and the network latency from the corresponding individual IoT device back to the headend device.

3. The method of any of claims 1-2, wherein the minimum inter-message delay for each IoT device of the plurality of IoT devices is based at least in part on a number of hops between the headend device and the corresponding individual IoT device across the mesh network.

4. The method of any of claims 1-3, wherein the minimum inter-message delay for each IoT device of the plurality of IoT devices is based at least in part on a packet loss rate between the headend device and the corresponding individual IoT device across the mesh network.

5. The method of any of claims 1-4, wherein the minimum inter-message delay for each IoT device of the plurality of IoT devices is based at least in part on:

   a network latency between the headend device and the corresponding individual IoT device;

   a number of hops between the headend device and the corresponding individual IoT device across the mesh network; and

   a packet loss rate between the headend device and the corresponding individual IoT device across the mesh network.

6. The method of any of claims 1-5, wherein the headend device is configured to send commands to each of the plurality of IoT devices.

7. The method of claim 6, wherein the headend device includes a command queue that is configured to queue at least some of the commands before communicating the commands to the corresponding individual IoT devices of the plurality of IoT devices.

8. The method of claim 7, wherein the commands include configuration commands and status commands, and the headend device is configured to:

   determine when a number of configuration commands in the command queue is equal to or larger than a configuration command queue threshold; and

   when the number of configuration commands in the command queue is larger than the configuration command queue threshold, pause sending any of the status commands in the command queue until the number of configuration commands in the command queue falls below the configuration command queue threshold.

9. The method of any of claims 1-8, wherein the headend device is a gateway, and wherein the gateway is in communication with the plurality of IoT devices via the mesh network via a first port, and is in communication with an external controller via a second port.

10. The method of claim 9, wherein the gateway is configured to receive a plurality of commands from the external controller via the first port, and assemble and send corresponding commands to the plurality of IoT devices via the second port.

11. The method of claim 10, wherein the gateway is configured to acknowledge each of the plurality of commands received from the external controller via the first port before the gateway assembles and sends corresponding commands to the plurality of IoT devices via the second port.

12. The method of claim 11, wherein the gateway is configured to queue at least some of the corresponding commands in a command queue such that two or more commands sent to any corresponding individual IoT of the plurality of IoT devices are sent with an inter-message delay that is at least as great as the minimum inter-message delay of the corresponding individual IoT device.

13. A gateway comprising:

a first port for communicating with an external controller;
a second port for communicating with a plurality of Internet of Things (IoT) devices over a mesh network; and
a controller operatively coupled to the first port and the second port, the controller configured to:

determine a network delay associated with communicating between the controller and each of the plurality of IoT devices on the mesh network, wherein the network delay is representative of a network latency between the gateway and a corresponding individual IoT device;
receive a plurality of commands via the first port;
queue in a command queue at least some of the plurality of commands received via the first port;
send an acknowledgement via the first port for each of the plurality of commands received via the first port; and
assemble commands for delivery to the plurality of IoT devices via the second port, the assembled commands based on the plurality of commands received via the first port; and
automatically adjust a message delivery rate for delivering the assembled commands to each IoT device of the plurality of IoT devices based at least in part on the network delay determined for the corresponding individual IoT device.

14. The gateway of claim 13, wherein the network delay is a current network delay, and wherein the gateway is further configured to:

periodically send status commands to the plurality of IoT devices;
determine, based periodically sending the status commands, the current network delay associated with each of the IoT devices; and
automatically adjust the message delivery rate for delivering the assembled commands to each IoT device of the plurality of IoT device based at least in part on the current network delay determined for the corresponding individual IoT device.

15. The gateway of any of claims 13-14, wherein the gateway is in communication with the plurality of IoT devices via the mesh network via a first port, and is in communication with an external controller via a second port.

FIG. 1

| ID# | Incoming Command | STATUS | CONF | FLAG |
|---|---|---|---|---|
| | Mode1 | Off | On | New CFG |
| | Mode 2 | Off | Off | Synchronized |
| | PowerUpCondition | Previous State | On | New CFG |
| | LEDIndication | Off | Off | Synchronized |
| | TempAlarmAction | Lock Off | Lock Off | Synchronized |
| | Power1Alarm | No Alarm | NA | NA |
| | Power2Alarm | No Alarm | NA | NA |
| | TempAlarm | High Threshold Alarm | NA | NA |
| | ReceptacleOutletStatus | Online | NA | NA |
| | Power1HighAlarmAction | No Action | No Action | Synchronized |
| | Power1LowAlarmAction | No Action | Lock off | New CFG |
| | Power2HighAlarmAction | Lock Off | Lock off | Synchronized |
| | Power2LowAlarmAction | Off | No Action | New CFG |
| | OverrideDelayOff | 15min | 15min | Synchronized |
| | DelayOn | On | On | Synchronized |
| | Power1HighLimit | 150W | 150W | Synchronized |
| | Power1LowLimit | 200W | 150W | New CFG |
| | Power2HighLimit | 2500W | 2500W | Synchronized |
| | Power2LowLimit | 2800W | 2800W | Synchronized |
| | TempHighLimit | 70°C | 70°C | Synchronized |
| | Outlet Name | "Office" | "Office" | Synchronized |
| | ReceptacleName1 | "Air Conditioner" | "Air Conditioner" | Synchronized |
| | ReceptacleName2 | "Air Conditioner" | "Refrigerator" | New CFG |
| | Location | "NanHai Road" | "NanHai Road" | Synchronized |
| | Description | "Rea-Room" | Tea-Room" | Synchronized |
| | InsCurrent1 | 5.2A | NA | NA |
| | InsCurrent2 | 8.3A | NA | NA |
| | InsRealPower1 | 624W | NA | NA |
| | InsRealPower2 | 996W | NA | NA |
| | InsTemp | 53°C | NA | NA |
| | Energy1 | 55KWH | NA | NA |
| | Energy2 | 83KWH | NA | NA |

41 40 42 44 46

17

# FIG. 2

| ID# | Offline/Online | TTR | HOPS | PLR | Dt |
|---|---|---|---|---|---|
| 00E05C700DC1 | offline | 800ms | N/A | 70% | 600ms |
| 00E05C700DC1 | online | 1020ms | 3 | 0.01% | 850ms |
| ⋮ | ⋮ | ⋮ | ⋮ | ⋮ | ⋮ |
| 00E05C700DD9 | online | 1830ms | 4 | 0.5% | 1430ms |

FIG. 3

FIG. 4

80

82 — Is Device Online ?

N

Y

84 — Send Status command

86 — Delay with "Dt", switch to next IoT Device

FIG. 5

FIG. 6

FIG. 7

FIG. 8

FIG. 9

FIG. 10